# EUROPÄISCHE PATENTSCHRIFT

(11) **EP 2 576 853 B1**
(45) Veröffentlichungstag und Bekanntmachung des Hinweises auf die Patenterteilung: **29.10.2014**
(21) Anmeldenummer: 11724167.9
(22) Anmeldetag: 31.05.2011
(51) Int. Cl.: C23C 4/08, C23C 30/00, C22C 19/05, F01D 5/28, F01D 25/00

(54) **LEGIERUNG, SCHUTZSCHICHT UND BAUTEIL**
Alloy, protective layer and component
Alliage, couche de protection et composant

(30) Priorität: 02.06.2010 EP 10005771
(43) Veröffentlichungstag der Anmeldung: 10.04.2013
(60) Teilanmeldung: 13000305.6
(73) Patentinhaber: Siemens Aktiengesellschaft, 80333 München (DE)
(72) Erfinder: SCHMITZ, Friedhelm, 46537 Dinslaken (DE); STAMM, Werner, 45481 Mülheim an der Ruhr (DE)
(86) Internationale Anmeldenummer: PCT/EP2011/058965
(87) Internationale Veröffentlichungsnummer: WO 2011/151334

(56) Entgegenhaltungen:
- EP-A1- 1 380 672
- EP-A1- 1 790 743
- EP-A1- 1 806 418
- EP-B1- 0 948 667

## Beschreibung

Die Erfindung betrifft eine Legierung gemäß Anspruch 1, eine Schutzschicht zum Schutz eines Bauteils gegen Korrosion und/oder Oxidation insbesondere bei hohen Temperaturen gemäß Anspruch 12 und ein Bauteil gemäß Anspruch 14.

Schutzschichten für metallische Bauteile, die deren Korrosionsbeständigkeit und/oder Oxidationsbeständigkeit erhöhen sollen, sind im Stand der Technik in großer Zahl bekannt.

Die meisten dieser Schutzschichten sind unter dem Sammelnamen MCrAlY bekannt, wobei M für mindestens eines der Elemente aus der Gruppe umfassend Eisen, Kobalt und Nickel steht und weitere wesentliche Bestandteile Chrom, Aluminium und Yttrium sind.

Typische Beschichtungen dieser Art sind aus den US-Patenten 4,005,989 und 4,034,142 sowie der europäischen Anmeldung EP 1 790 743 A1 bekannt.

Die Bemühung um die Steigerung der Eintrittstemperaturen sowohl bei stationären Gasturbinen als auch bei Flugtriebwerken hat auf dem Fachgebiet der Gasturbinen eine große Bedeutung, da die Eintrittstemperaturen wichtige Bestimmungsgrößen für die mit Gasturbinen erzielbaren thermodynamischen Wirkungsgrade sind. Durch den Einsatz speziell entwickelter Legierungen als Grundwerkstoffe für thermisch hoch zu belastende Bauteile wie Leit- und Laufschaufeln, insbesondere durch den Einsatz einkristalliner Superlegierungen, sind Eintrittstemperaturen von deutlich über 1000°C möglich. Inzwischen erlaubt der Stand der Technik Eintrittstemperaturen von 950°C und mehr bei stationären Gasturbinen sowie 1100°C und mehr in Gasturbinen von Flugtriebwerken.

Beispiele zum Aufbau einer Turbinenschaufel mit einem einkristallinen Substrat, die seinerseits komplex aufgebaut sein kann, gehen hervor aus der WO 91/01433 A1.

Während die physikalische Belastbarkeit der inzwischen entwickelten Grundwerkstoffe für die hoch belasteten Bauteile im Hinblick auf mögliche weitere Steigerungen der Eintrittstemperaturen weitgehend unproblematisch ist, muss zur Erzielung einer hinreichenden Beständigkeit gegen Oxidation und Korrosion auf Schutzschichten zurückgegriffen werden. Neben der hinreichenden chemischen Beständigkeit einer Schutzschicht unter den Angriffen, die von Rauchgasen bei Temperaturen in der Größenordnung von 1000°C zu erwarten sind, muss eine Schutzschicht auch genügend gute mechanische Eigenschaften, nicht zuletzt im Hinblick auf die mechanische Wechselwirkung zwischen der Schutzschicht und dem Grundwerkstoff, haben. Insbesondere muss die Schutzschicht hinreichend duktil sein, um eventuellen Verformungen des Grundwerkstoffs folgen zu können und nicht zu reißen, da auf diese Weise Angriffspunkte für Oxidation und Korrosion geschaffen würden. Hierbei tritt typischerweise das Problem auf, dass eine Erhöhung der Anteile von Elementen wie Aluminium und Chrom, die die Beständigkeit einer Schutzschicht gegen Oxidation und Korrosion verbessern können, zu einer Verschlechterung der Duktilität der Schutzschicht führt, so dass mit einem mechanischen Versagen, insbesondere der Bildung von Rissen, bei einer in einer Gasturbine üblicherweise auftretenden mechanischen Belastung zu rechnen ist.

Dementsprechend liegt der Erfindung die Aufgabe zugrunde, eine Legierung und eine Schutzschicht anzugeben, die eine gute Hochtemperaturbeständigkeit in Korrosion und Oxidation aufweist, eine gute Langzeitstabilität aufweist und die außerdem einer mechanischen Beanspruchung, die insbesondere in einer Gasturbine bei einer hohen Temperatur zu erwarten ist, besonders gut angepasst ist.

Die Aufgabe wird gelöst durch eine Legierung gemäß Anspruch 1 und eine Schutzschicht gemäß Anspruch 12.

Eine weitere Aufgabe der Erfindung besteht darin, ein Bauteil aufzuzeigen, das einen erhöhten Schutz gegen Korrosion und Oxidation aufweist.

Die Aufgabe wird ebenso gelöst durch ein Bauteil gemäß Anspruch 14, insbesondere ein Bauteil einer Gasturbine oder Dampfturbine, das zum Schutz gegen Korrosion und Oxidation bei hohen Temperaturen einer Schutzschicht der vorbeschriebenen Art aufweist.

In den Unteransprüchen sind weitere vorteilhafte Maßnahmen aufgelistet, die beliebig in vorteilhafter Art und Weise miteinander verknüpft werden können.

Die Erfindung wird im Folgenden näher erläutert.

Es zeigen
- Figur 1: ein Schichtsystem mit einer Schutzschicht,
- Figur 2: Zusammensetzungen von Superlegierungen,
- Figur 3: eine Gasturbine,
- Figur 4: eine Turbinenschaufel und
- Figur 5: eine Brennkammer.

Die Figuren und die Beschreibung stellen nur Ausführungsbeispiele der Erfindung dar.

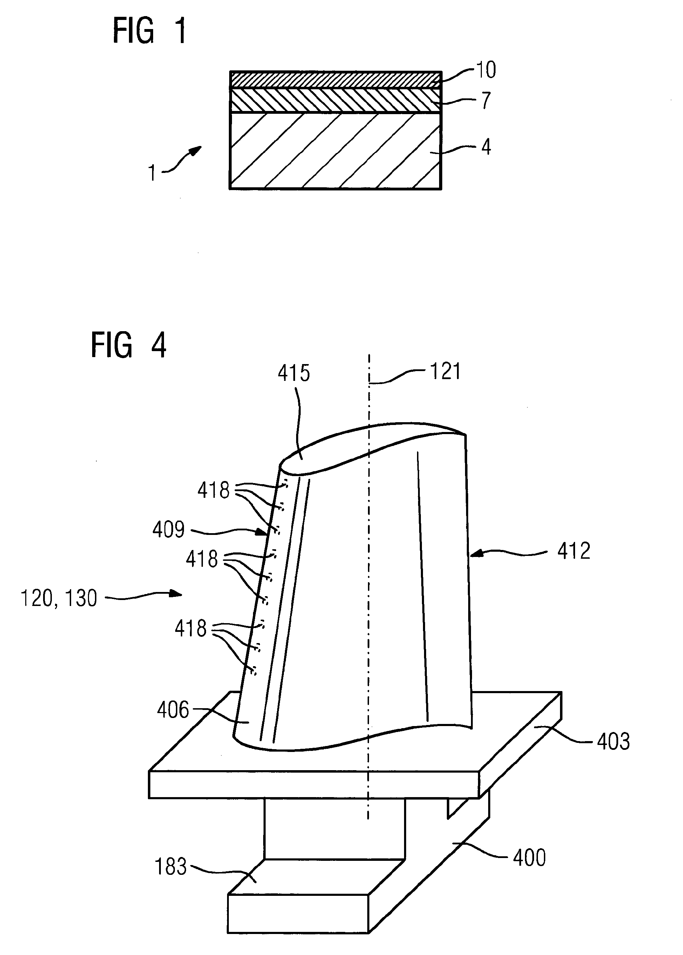

Erfindungsgemäß besteht eine Schutzschicht 7 (Fig. 1) zum Schutz eines Bauteils gegen Korrosion und Oxidation bei einer hohen Temperatur im Wesentlichen aus folgenden Elementen (Angabe der Anteile in Gew.%):
Co: 24% - 26%
Cr: 12% - 15%
Al : 10,5% - 11,5%
0,1% - 0,7% Seltene-Erden-Element (Yttrium, ...) und/oder Scandium (Sc):
optional
Si: 0,05% - 0,4%
Ta: 0,1% - 3%.
enthaltend Kein Rhenium (Re)
Rest Ni

Die Auflistung der Legierungselemente Ni, Co, Cr, Al, Y, Si, Ta ist nicht abschließend.

Nickel bildet vorzugsweise die Matrix.

Vorzugsweise ist die Auflistung von Ni, Co, Cr, Al, Y, Si, Ta abschließend.

Die Gehalte der Legierungselemente haben folgende Vorteile:
Mittelhoher Co-Gehalt:
   Verbreiterung des Beta/Gamma-Feldes, Vermeidung spröder Phasen wie z.B. der Alpha-Phasen.
Mittlerer Cr-Gehalt:
   Ausreichend hoch zur Aktivitätserhöhung von Al zur Al₂O₃-Bildung;
   niedrig genug um spröde Phasen (Alpha-Chrom oder Sigma-Phase) zu vermeiden.
Mittelhoher Al-Gehalt:
   Ausreichend hoch für Al-Aktivität zur Ausbildung einer stabilen Al₂O₃-Schicht;
   niedrig genug um Versprödungseffekte zu vermeiden.
Niedriger Y-Gehalt:
   Ausreichend hoch um bei geringer Sauerstoffkontamination noch genügend Y-Aluminat zur Bildung von Y-haltigen "pegs" zu bilden;
   niedrig genug um das Oxidschichtwachstum der Al₂O₃-Schicht negativ zu beschleunigen.
Niedriger Si-Gehalt:
   Hoch genug um die Oxidschichthaftung leicht zu verbessern;
   niedrig genug um nicht die Duktilität der Schicht zu beeinträchtigen.

Festzustellen ist, dass die Anteile der einzelnen Elemente besonders abgestimmt sind im Hinblick auf ihre Wirkungen, die insbesondere in Zusammenhang mit dem Element Silizium zu sehen sind. Wenn die Anteile so bemessen sind, dass sich keine Silizium-Ausscheidungen bilden, entstehen vorteilhafterweise keine Sprödphasen während des Einsatzes der Schutzschicht, so dass das Laufzeitverhalten verbessert und verlängert ist.

Dies geschieht nicht nur durch einen geringen Chromgehalt, sondern auch, unter Berücksichtigung des Einflusses von Aluminium auf die Phasenbildung, durch genaue Bemessung des Gehalts an Aluminium.

In Wechselwirkung mit der Reduzierung der Sprödphasen, die sich besonders unter höheren mechanischen Eigenschaften negativ auswirken, werden durch die Verringerung der mechanischen Spannungen durch den ausgewählten Nickel-Gehalt die mechanischen Eigenschaften verbessert.

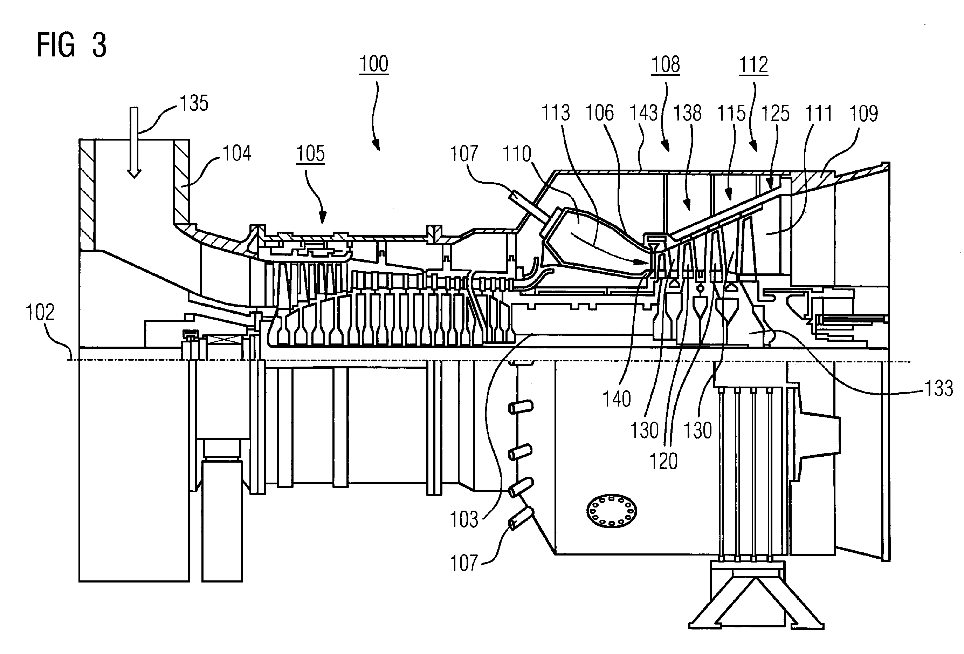

Die Schutzschicht weist bei guter Korrosionsbeständigkeit eine besonders gute Beständigkeit gegen Oxidation auf und zeichnet sich auch durch besonders gute Duktilitätseigenschaften aus, so dass sie besonders qualifiziert ist für die Anwendung in einer Gasturbine 100 (Fig. 3) bei einer weiteren Steigerung der Eintrittstemperatur. Während des Betriebs kommt es kaum zu einer Versprödung, da die Schicht kaum Chrom-Silizium-Ausscheidungen aufweist, die im Laufe des Einsatzes verspröden.

Eine ebenso wichtige Rolle spielen die Spurenelemente im zu verspritzenden Pulver, die Ausscheidungen bilden und damit Versprödungen darstellen.

Die Pulver werden beispielsweise durch Plasmaspritzen aufgebracht (APS, LPPS, VPS, ...), um eine Schutzschicht zu bilden. Andere Verfahren sind ebenso denkbar (PVD, CVD, SPPS, ...).

Die beschriebene Schutzschicht 7 wirkt auch als Haftvermittlerschicht zu einer Superlegierung.

Auf diese Schutzschicht 7 können weitere Schichten, insbesondere keramische Wärmedämmschichten 10 aufgebracht werden.

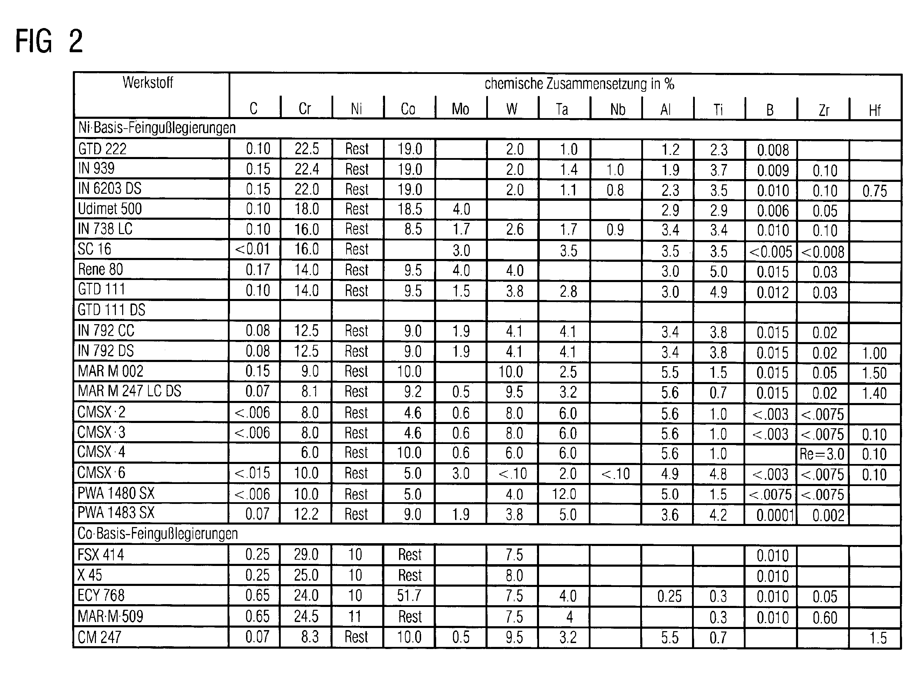

Bei einem Bauteil 1 ist die Schutzschicht 7 vorteilhafterweise aufgetragen auf ein Substrat 4 aus einer Superlegierung auf Nickel- oder Kobaltbasis (Figur 2).

Als Substrat kommt insbesondere folgende Zusammensetzung in Frage (Angaben in Gew.%):

| | | | |
|---|---|---|---|
| 0,1% | bis | 0,15% | Kohlenstoff |
| 18% | bis | 22% | Chrom |
| 18% | bis | 19% | Kobalt |
| 0% | bis | 2% | Wolfram |
| 0% | bis | 4% | Molybdän |
| 0% | bis | 1,5% | Tantal |
| 0% | bis | 1% | Niob |
| 1% | bis | 3% | Aluminium |
| 2% | bis | 4% | Titan |
| 0% | bis | 0,75% | Hafnium |

wahlweise geringe Anteile von Bor und/oder Zirkon, Rest Nickel.

Zusammensetzungen dieser Art sind als Gusslegierungen unter den Bezeichnungen GTD222, IN939, IN6203 und Udimet 500 bekannt.

Weitere Alternativen für das Substrat 4 (Figur 2) des Bauteils 1, 120, 130, 155 sind in der Figur 2 aufgelistet.

Die Dicke der Schutzschicht 7 auf dem Bauteil 1 wird vorzugsweise auf einen Wert zwischen etwa 100µm und 300µm bemessen.

Die Schutzschicht 7 eignet sich besonders zum Schutz des Bauteils 1, 120, 130, 155 gegen Korrosion und Oxidation, während das Bauteil bei einer Materialtemperatur um etwa 950°C, bei Flugturbinen auch um etwa 1100°C, mit einem Rauchgas beaufschlagt wird.

Die Schutzschicht 7 gemäß der Erfindung ist damit besonders qualifiziert zum Schutz eines Bauteils einer Gasturbine 100, insbesondere einer Leitschaufel 120, Laufschaufel 130 oder eines Hitzeschildelements 155, das mit heißem Gas vor oder in der Turbine der Gasturbine 100 oder der Dampfturbine beaufschlagt wird.

Die Schutzschicht 7 kann als overlay (Schutzschicht ist die äußerste Schicht oder als Bondcoat (Schutzschicht ist eine Zwischenschicht) verwendet werden.

Figur 1 zeigt als ein Bauteil ein Schichtsystem 1.

Das Schichtsystem 1 weist ein Substrat 4 auf.

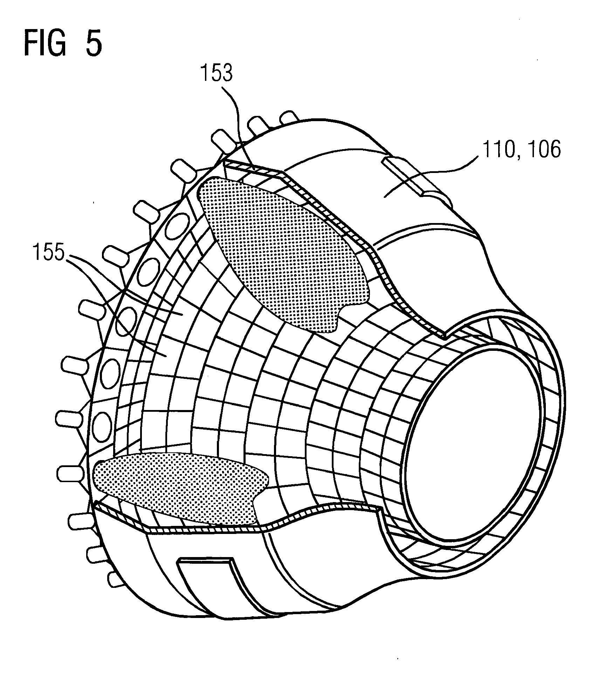

Das Substrat 4 kann metallisch und/oder keramisch sein. Insbesondere bei Turbinenbauteilen, wie z.B. Turbinenlauf- 120 (Fig. 4) oder -leitschaufeln 130 (Fig. 3, 4), Hitzeschildelementen 155 (Fig. 5) sowie anderen Gehäuseteilen einer Dampf- oder Gasturbine 100 (Fig. 3), weist das Substrat 4 eine nickel-, kobalt- oder eisenbasierte Superlegierung auf, insbesondere besteht sie daraus.

Vorzugsweise werden nickelbasierte Superlegierungen (Fig. 2) verwendet.

Auf dem Substrat 4 ist die erfindungsgemäße Schutzschicht 7 vorhanden.

Vorzugsweise wird diese Schutzschicht 7 durch Plasmaspritzen (VPS, LPPS, APS, ...) aufgebracht.

Diese kann als äußere Schicht (nicht dargestellt) oder Zwischenschicht (Fig. 1) verwendet werden.

Vorzugsweise ist auf der Schutzschicht 7 eine keramische Wärmedämmschicht 10 vorhanden.

Vorzugsweise besteht das Schichtsystem aus Substrat 4, Schutzschicht 7 und keramischer Wärmedämmschicht 10, optional einer TGO unter der Wärmedämmschicht 10.

Die Schutzschicht 7 kann auf neu hergestellte Bauteile und wieder aufgearbeitete Bauteile aus dem Refurbishment aufgebracht werden.

Wiederaufarbeitung (Refurbishment) bedeutet, dass Bauteile 1 nach ihrem Einsatz gegebenenfalls von Schichten (Wärmedämmschicht) getrennt werden und Korrosions- und Oxidationsprodukte entfernt werden, beispielsweise durch eine Säurebehandlung (Säurestrippen). Gegebenenfalls müssen noch Risse repariert werden. Danach kann ein solches Bauteil wieder beschichtet werden, da das Substrat 4 sehr teuer ist.

Die Figur 3 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 4 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 erfindungsgemäße Schutzschichten 7 gegen Korrosion oder Oxidation aufweisen.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Auf der MCrAlX kann noch eine Wärmedämmschicht vorhanden sein, die vorzugsweise die äußerste Schicht ist, und besteht beispielsweise aus ZrO₂ Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 5 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.

Diese Schutzschichten 7 können ähnlich der Turbinenschaufeln sein.

Auf der MCrAlX kann noch eine beispielsweise keramische Wärmedämmschicht vorhanden sein und besteht beispielsweise aus ZrO₂ Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Legierung
die folgende Elemente enthält (Angaben in Gew.%):
24% - 26% Kobalt (Co).
insbesondere 25%,
12% - 15% Chrom (Cr),
insbesondere 12% bis 14% Chrom (Cr),
ganz insbesondere 13% Chrom (Cr),
10,5% - 11,5% Aluminium (Al),
insbesondere 11wt% Aluminium (Al),
0,1% - 0,7% zumindest eines Metalls aus der Gruppe umfassend Scandium (Sc) und/oder die Elemente der Seltenen Erden,
insbesondere Yttrium (Y),
optional 0,1% bis 3% Tantal (Ta) und/oder optional 0,05% bis 0,6% Silizium (Si),
Rest Nickel (Ni),
enthaltend kein Rhenium (Re).

2. Legierung nach Anspruch 1,
enthaltend 0,2 Gew.% - 0,4 Gew.% Yttrium,
insbesondere 0,3 Gew.% Yttrium.

3. Legierung nach einem oder mehreren der vorherigen Ansprüche,
die Silizium (Si) enthält,
insbesondere mindestens 0,1 Gew.% Silizium (Si) enthält.

4. Legierung nach einem oder mehreren der vorherigen Ansprüche,
die 0,2 Gew.% bis 0,4 Gew.% Silizium (Si),
insbesondere 0,3 Gew.% Silizium (Si) enthält.

5. Legierung nach Anspruch 1, 2, 3 oder 4,
die Tantal (Ta) enthält,
insbesondere mindestens 0,5 Gew.% Tantal (Ta) enthält, ganz insbesondere mindestens 1,0 Gew.% Tantal (Ta) enthält.

6. Legierung nach einem oder mehreren der vorherigen Ansprüche,
nicht enthaltend Zirkon (Zr) und/oder nicht enthaltend Titan (Ti) und/oder nicht enthaltend Gallium (Ga) und/oder nicht enthaltend Germanium (Ge) und/oder nicht enthaltend Platin (Pt) und/oder nicht enthaltend Hafnium (Hf) und/oder nicht enthaltend Cer (Ce).

7. Legierung nach einem oder mehreren der vorherigen Ansprüche,
bestehend aus Kobalt, Chrom, Aluminium, Yttrium, Nickel sowie folgenden optionalen Bestandteilen: Silizium und/oder Tantal.

8. Legierung nach einem oder mehreren der vorherigen Ansprüche 1 bis 7,
bestehend aus Kobalt, Chrom, Aluminium, Yttrium, Nickel und Silizium.

9. Legierung nach einem oder mehreren der vorherigen Ansprüche 1 bis 7,
bestehend aus Kobalt, Chrom, Aluminium, Yttrium, Silizium, Tantal und Nickel.

10. Legierung nach einem oder mehreren der vorherigen Ansprüche 1 bis 7,
bestehend aus Kobalt, Chrom, Aluminium, Yttrium, Nickel und Tantal.

11. Legierung nach einem oder mehreren der vorherigen Ansprüche,
bei der Nickel (Ni) die Matrix bildet.

12. Schutzschicht (7) zum Schutz eines Bauteils (1) gegen Korrosion und/oder Oxidation,
insbesondere bei hohen Temperaturen,
die die Zusammensetzung der Legierung gemäß einem oder mehreren der Ansprüche 1 bis 11 aufweist.

13. Schutzschicht (7) nach Anspruch 12,
die durch Plasmaspritzen,
insbesondere APS oder
Hochgeschwindigkeitsspritzen (HVOF),
aufgebracht ist.

14. Bauteil,
insbesondere ein Bauteil (120, 130, 155) einer Gasturbine (100),
insbesondere bei dem ein Substrat (4) des Bauteils (120, 130, 155) nickelbasiert oder kobaltbasiert ist,
das zum Schutz gegen Korrosion und Oxidation bei hohen Temperaturen eine Schutzschicht (7) nach Anspruch 12 oder 13 aufweist,
bei dem insbesondere auf der Schutzschicht (7) eine keramische Wärmedämmschicht (10) aufgebracht ist.

## Claims

1. Alloy,
which contains the following elements(data in wt%): 24% - 26% cobalt (Co),
in particular 25%, 12% - 15% chromium (Cr),
in particular from 12% to 14% chromium (Cr),
very particularly preferably 13% chromium (Cr), 10.5% - 11.5% aluminum (Al),
in particular 11 wt% aluminum (Al), 0.1% - 0.7% at least one metal from the group comprising scandium (Sc) and/or a rare earth element,
in particular yttrium (Y),
optionally from 0.1% to 3% tantalum (Ta) and/or
optionally 0.05% to 0.6% silicon (Si),
balance nickel(Ni),
containing no rhenium (Re).

2. Alloy according to Claim 1,
containing 0.2 wt% - 0.4 wt% yttrium,
in particular 0.3 wt% yttrium.

3. Alloy according to one or more of the preceding claims, which contains silicon (Si)
in particular contains at least 0.1 wt% silicon (Si).

4. Alloy according to one or more of the preceding claims, which contains from 0.2 wt% to 0.4 wt% silicon (Si),
in particular contains 0.3 wt% silicon (Si).

5. Alloy according to Claim 1, 2, 3 or 4,
which contains tantalum (Ta),
in particular contains at least 0.5 wt% tantalum (Ta),
very particularly preferably contains at least 1.0 wt% tantalum (Ta).

6. Alloy according to one or more of the preceding claims, not containing zirconium (Zr) and/or not containing titanium (Ti) and/or not containing gallium (Ga) and/or not containing germanium (Ge) and/or not containing platinum (Pt) and/or not containing hafnium (Hf) and/or not containing cerium (Ce).

7. Alloy according to one or more of the preceding claims, consisting of cobalt, chromium, aluminum, yttrium, nickel and the following optional constituents: silicon and/or tantalum.

8. Alloy according to one or more of the preceding Claims 1 to 7,
consisting of cobalt, chromium, aluminum, yttrium, nickel and silicon.

9. Alloy according to one or more of the preceding Claims 1 to 7,
consisting of cobalt, chromium, aluminum, yttrium, silicon, tantalum and nickel.

10. Alloy according to one or more of the preceding Claims 1 to 7,
consisting of cobalt, chromium, aluminum, yttrium, nickel and tantalum.

11. Alloy according to one or more of the preceding claims,
in which nickel (Ni) forms the matrix.

12. Protective layer (7) for protecting a component (1) against corrosion and/or oxidation,
in particular at high temperatures,
which has the composition of the alloy according to one or more of Claims 1 to 11.

13. Protective layer (7) according to Claim 12,
which is applied
by plasma spraying,
in particular APS or
high velocity spraying (HVOF).

14. Component,
in particular a component (120, 130, 155) of a gas turbine (100),
in particular wherein a substrate (4) of the component (120, 130, 155) is nickel-based or cobalt-based,
which comprises a protective layer (7) according to Claim 12 or 13 in order to protect against corrosion and oxidation at high temperatures,
wherein in particular a ceramic thermal barrier layer (10) is applied onto the protective layer (7).

## Revendications

1. Alliage
qui contient les éléments suivants (indications en pourcentage en poids) :
de 24% à 26% de cobalt ( Co ),
notamment 25%,
de 12% à 15% de chrome ( Cr ) ,
notamment 12% à 14% de chrome ( Cr ),
tout à fait particulièrement 13% de chrome ( Cr ),
de 10,5% à 11,5% d'aluminium ( Al ),
notamment 11% en poids d'aluminium ( Al ),
de 0,1% à 0,7% d'au moins un métal du groupe comprenant le scandium ( Sc ) et/ou les éléments des terres rares,
notamment de l'yttrium ( Y ),
facultativement de 0,1% à 3% de tantale ( Ta ) et/ou facultativement de 0,05% à 0,6% de silicium ( Si ),
le reste étant du nickel ( Ni ),
ne contenant pas de rhénium ( Re ).

2. Alliage suivant la revendication 1,
contenant de 0,2% en poids à 0,4% en poids d'yttrium, notamment 0,3% en poids d'yttrium.

3. Alliage suivant l'une ou plusieurs des revendications précédentes,
qui contient du silicium ( Si ),
qui contient notamment au moins 0,1% en poids de silicium ( Si ).

4. Alliage suivant l'une ou plusieurs des revendications précédentes,
qui contient de 0,2% en poids à 0,4% en poids de silicium ( Si ),
notamment 0,3% en poids de silicium ( Si ).

5. Alliage suivant la revendication 1, 2, 3 ou 4,
qui contient du tantale ( Ta ),
qui contient notamment au moins 0,5% en poids de tantale ( Ta ),
qui contient d'une manière tout à fait particulière au moins 1,0% en poids de tantale ( Ta ).

6. Alliage suivant l'une ou plusieurs des revendications précédentes,
ne contenant pas de zirconium ( Zr ) et/ou ne contenant pas de titane ( Ti ) et/ou ne contenant pas de gallium ( Ga ) et/ou ne contenant pas de germanium ( Ge ) et/ou ne contenant pas de platine ( Pt ) et/ou ne contenant pas d'hafnium ( Hf ) et/ou ne contenant pas de cérium ( Ce ).

7. Alliage suivant l'une ou plusieurs des revendications précédentes,
constitué de cobalt, de chrome, d'aluminium, d'yttrium, de nickel ainsi que des constituants facultatifs suivants : silicium et/ou tantale.

8. Alliage suivant l'une ou plusieurs des revendications précédentes 1 à 7,
constitué de cobalt, de chrome, d'aluminium, d'yttrium, de nickel et de silicium.

9. Alliage suivant l'une ou plusieurs des revendications précédentes 1 à 7,
constitué de cobalt, de chrome, d'aluminium, d'yttrium, de silicium, de tantale et de nickel.

10. Alliage suivant l'une ou plusieurs des revendications précédentes 1 à 7,
constitué de cobalt, de chrome, d'aluminium, d'yttrium, de nickel et de tantale.

11. Alliage suivant l'une ou plusieurs des revendications précédentes,
dans lequel le nickel ( Ni ) forme la matrice.

12. Couche ( 7 ) de protection pour la protection d'une pièce ( 1 ) vis-à-vis de la corrosion et/ou de l'oxydation, notamment à des températures hautes,
qui a la composition de l'alliage suivant l'une ou plusieurs des revendications 1 à 11.

13. Couche ( 7 ) de protection suivant la revendication 12,
qui est déposée par projection au plasma,
notamment par APS ou
par projection à grande vitesse ( HVOF ).

14. Pièce,
notamment pièce ( 120, 130, 155 ) d'une turbine ( 100 ) à gaz, notamment dans laquelle un substrat ( 4 ) de la pièce ( 120, 130, 155 ) est à base de nickel ou est à base de cobalt,
qui a, pour la protection vis-à-vis de la corrosion et de l'oxydation à des températures hautes, une couche ( 7 ) de protection suivant la revendication 12 ou 13,
dans laquelle une couche ( 10 ) réfractaire en céramique est déposée notamment sur la couche ( 7 ) de protection.
